# FASCICULE DE BREVET EUROPEEN

(11) **EP 3 908 453 B1**
(45) Date de publication et mention de la délivrance du brevet: **18.01.2023**
(21) Numéro de dépôt: 20713351.3
(22) Date de dépôt: 21.02.2020
(51) Int. Cl.: B29C 65/22, B23P 15/04, B29C 65/48, B29C 65/00, F01D 25/28, F16B 11/00, B29C 65/78, B29D 99/00, B29L 31/08, B29C 65/10, B29C 65/14, F01D 5/28, F01D 5/14

(54) **ASSEMBLAGE D'UNE AUBE DIRECTRICE DE SORTIE POUR TURBOMACHINE D'AÉRONEF À L'AIDE D'UNE VESSIE GONFLABLE**
ANORDNUNG EINER AUSLASSLEITSCHAUFEL FÜR EINE TURBOMASCHINE EINES FLUGZEUGS MIT AUFBLASBARER BLASE
ASSEMBLY OF AN OUTLET GUIDE VANE FOR AN AIRCRAFT TURBOMACHINE USING AN INFLATABLE BLADDER

(30) Priorité: 27.02.2019 FR 1901996
(43) Date de publication de la demande: 17.11.2021
(73) Titulaire: SAFRAN AIRCRAFT ENGINES, 75015 Paris (FR)
(72) Inventeur: BIENVENU, Steven Gérard Joseph, 77550 MOISSY-CRAMAYEL (FR); SIROT, Clément René Roger, 77550 MOISSY-CRAMAYEL (FR)
(74) Mandataire: Brevalex
(86) Numéro de dépôt international: PCT/FR2020/050328
(87) Numéro de publication internationale: WO 2020/174163

(56) Documents cités:
- EP-A1- 3 434 867
- US-A1- 2013 309 096

## Description

### Domaine technique

La présente invention se rapporte au domaine des turbomachines d'aéronef du type turboréacteur à double flux, et en particulier à la fabrication d'aubes directrices exposées au flux d'air secondaire circulant dans la veine secondaire d'un tel turboréacteur.

Ces aubes directrices sont de préférence destinées à former un aubage directeur de sortie, également dénommé « OGV » (de l'anglais « Outlet Guide Vane »), prévu pour redresser le flux d'air secondaire en sortie du turboréacteur.

### État de la technique antérieure

La réalisation d'une aube directrice de sortie nécessite généralement l'assemblage de deux pièces préfabriquées. L'une de ces pièces forme un corps de l'aube qui comporte des creux destinés à réduire sa masse. Ce corps comprend notamment une première face externe formant un extrados de l'aube. L'autre pièce est un capot agencé pour être fixé au corps de manière à former, avec une deuxième face externe du corps, un intrados de l'aube. Le document EP3434867 A1 divulgue un procédé d'assemblage d'une aube d'un turboréacteur d'aéronef à double flux comprenant une étape de disposition d'une vessie gonflable contre l'intrados de l'aube. Le document US2013309096 A1 divulgue comment de l'air comprimé en contact direct avec l'aube va conformer l'aube dans un support en gonflant une membrane souple (extensible) de type vessie contenant de l'air comprimé et fixée à une poutre.

Dans l'état de la technique antérieure, la fixation du corps et du capot est généralement réalisée par collage de ces pièces à l'aide d'une résine polymérisable. La polymérisation implique de chauffer la résine, typiquement à une température comprise entre 160°C et 180°C, dans une configuration dans laquelle le capot est maintenu plaqué contre le corps.

Pour ce faire, une technique conventionnelle consiste à placer le corps et le capot dans une poche hermétique, à mettre cette poche sous vide, puis à chauffer cet ensemble au sein d'un autoclave. La mise sous vide de la poche permet notamment d'éviter l'apparition de porosités dans le joint de résine polymérisé, de telles porosités étant susceptibles d'apparaître sous l'effet d'un dégagement de gaz produit par la résine lors de sa polymérisation. Le différentiel de pression entre l'intérieur de la poche, mise sous vide, et l'enceinte de l'autoclave permet de générer un effort de plaquage du capot contre le corps apte à former un joint de résine d'épaisseur optimale, typiquement entre 80 µm et 300 µm, et à assurer une bonne adhésion aux interfaces joint-corps et joint-capot. L'effort de plaquage correspond typiquement à une pression relative comprise entre 1^{∗}10⁵ Pa et 5^{∗}10⁵ Pa.

Cette technique présente plusieurs inconvénients. Notamment, le placement du corps et du capot dans la poche hermétique est une étape longue et délicate au cours de laquelle celle-ci peut se perforer ou se déchirer. En effet, à ce stade de fabrication de l'aube, le corps et le capot comprennent typiquement des arêtes vives ou des parties saillantes tranchantes. Une perforation ou une déchirure de la poche empêchent de mettre celle-ci sous vide et d'accoster correctement le corps et le capot, ce qui entraîne typiquement des défauts géométriques et mécaniques de l'aube. De plus, une telle poche hermétique est un consommable à usage unique qu'il n'est pratiquement pas possible de réparer, une poche déjà utilisée pouvant comprendre des micro-perforations invisibles à l'œil nu et/ou de larges déchirures.

La présente invention vise à éliminer de tels inconvénients et a notamment pour but de fournir un procédé et un outillage permettant de réduire la durée d'une telle opération d'assemblage.

Un autre but de l'invention est d'éviter de recourir à un outillage comprenant des consommables à usage unique.

### Exposé de l'invention

A cet effet, l'invention a pour objet un procédé d'assemblage d'une aube pour aubage directeur de sortie d'un turboréacteur d'aéronef à double flux, comprenant :
- une étape de dépôt d'une résine polymérisable sur une face de jonction d'un corps de ladite aube,
- une étape de positionnement d'un capot de l'aube sur ladite face de jonction recouverte de ladite résine de sorte qu'une face externe du capot et une face externe du corps forment ensemble un intrados de cette aube.

Selon l'invention, ce procédé comprend :
- une étape de disposition d'une vessie gonflable contre l'intrados de l'aube,
- une étape d'enveloppement de la vessie, du capot et du corps avec une poche de manière à maintenir la vessie contre l'intrados,
- une étape de gonflage de la vessie ainsi maintenue contre l'intrados de manière à exercer sur le capot un effort de plaquage de celui-ci contre ladite face de jonction du corps,
- une étape de chauffage apte à polymériser la résine et fixer ainsi le capot sur le corps de l'aube.

La mise en œuvre d'un outillage comportant une vessie gonflable et une poche enveloppante permet de maintenir le capot plaqué contre le corps pendant la polymérisation de la résine, rendant inutile la mise sous vide d'une poche hermétique. Cela permet d'éviter les inconvénients associés à l'utilisation d'une telle poche hermétique. En particulier, la durée d'installation de la vessie et de la poche selon l'invention, c'est-à-dire la durée des étapes de disposition, d'enveloppement et de gonflage de la vessie, peut être considérablement réduite par rapport à la durée requise pour placer le corps et le capot dans une poche hermétique conventionnelle et mettre celle-ci sous vide.

De plus, l'invention permet de polymériser la résine sans recourir spécifiquement à un autoclave. En effet, le gonflage de la vessie permet à l'outillage seul de maintenir le capot plaqué contre le corps, sans nécessiter une modification de la pression environnante lors du chauffage.

Selon une première variante, l'étape de chauffage peut comprendre un chauffage de la vessie à l'aide de moyens de chauffage internes à la vessie, c'est-à-dire des moyens de chauffage montés dans celle-ci. Par exemple, ces moyens de chauffage peuvent comprendre des résistances électriques.

Selon une deuxième variante, l'étape de chauffage peut comprendre un apport de chaleur externe. De manière non limitative, cet apport de chaleur externe peut être réalisé à l'aide d'une étuve, d'un autoclave, ou encore d'un dispositif de chauffage par rayonnement ou par induction.

Ces deux variantes peuvent être mises en œuvre seules ou en combinaison l'une avec l'autre.

L'invention a aussi pour objet un outillage pour mettre en œuvre un tel procédé, cet outillage comprenant une vessie gonflable, et une poche apte à maintenir la vessie contre l'intrados de manière à exercer ledit effort de plaquage du capot contre ladite face de jonction du corps.

Afin de former un joint de résine polymérisée conférant à l'aube les propriétés mécaniques attendues, l'effort de plaquage doit permettre un accostage satisfaisant du capot et du corps tout au long de la mise en œuvre de l'étape de chauffage, laquelle peut typiquement durer entre une et deux heures.

A cet effet, la poche peut admettre une certaine élasticité lui permettant d'être déformée lors du gonflage de la vessie, pourvu que l'effort de plaquage du capot contre le corps soit suffisant pour que l'accostage soit effectivement satisfaisant pendant la polymérisation.

Bien que cela ne soit pas obligatoire, il est toutefois préféré que la poche soit réalisée dans un matériau inextensible.

Dans un mode de réalisation permettant de mettre en œuvre le procédé selon la deuxième variante mentionnée ci-dessus, l'outillage peut comprendre un dispositif d'apport de chaleur externe tel qu'une étuve ou un dispositif de chauffage par rayonnement ou par induction.

De préférence, la vessie peut comprendre du silicone.

Le silicone est un matériau avantageux pour mettre en œuvre cette invention, un tel matériau pouvant notamment conserver ses propriétés lorsqu'il est soumis à des matières volatiles telles que celles émises par la résine chauffée. De plus, le silicone présente de bonnes propriétés de démoulage ce qui favorise le réemploi de la vessie. Dans un mode de réalisation, la vessie peut comprendre un ou plusieurs renforts agencés pour la protéger de vives arêtes de l'aube.

Selon une première variante de ce mode de réalisation, la vessie peut comprendre un ou plusieurs inserts métalliques formant un ou plusieurs desdits renforts.

Selon une deuxième variante de ce mode de réalisation, un ou plusieurs desdits renforts sont constitués par une surépaisseur de la vessie.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en demi-coupe axiale d'un turboréacteur à double flux comprenant un aubage directeur de sortie ;
[Fig. 2] est une vue schématique en coupe transversale d'une aube pour l'aubage directeur de sortie du turboréacteur de la figure 1 ;
[Fig. 3] est une vue schématique en perspective d'un corps de l'aube de la figure 2 ;
[Fig. 4] est une vue schématique en perspective d'un capot de l'aube de la figure 2 ;
[Fig. 5] est une vue schématique en coupe transversale de l'aube de la figure 2 ainsi que d'un outillage de plaquage et de chauffage conforme à l'invention.

### Description détaillée de modes de réalisation

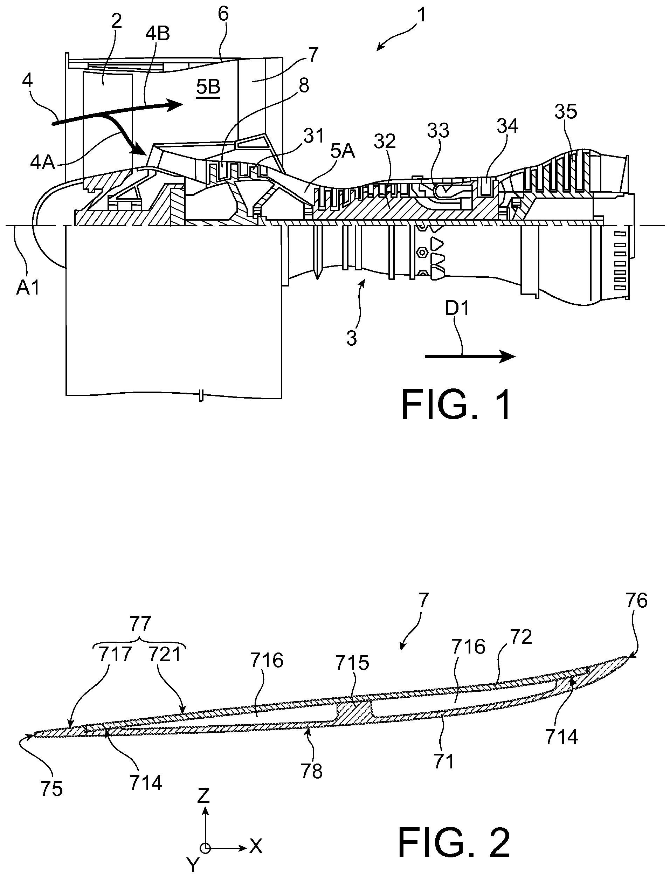

En référence à la figure 1, il est représenté un turboréacteur 1 à double flux et à double corps, pour aéronef (non représenté) du type avion de ligne.

Le turboréacteur 1 présente un axe central longitudinal A1 autour duquel s'étendent ses différents composants, en particulier, de l'amont vers l'aval du turboréacteur 1, une soufflante 2 et un générateur de gaz 3. Dans l'ensemble de cette description, les termes « amont » et « aval » sont définis relativement à une direction principale D1 d'écoulement des gaz au sein du turboréacteur 1. Le générateur de gaz 3 comporte, de l'amont vers l'aval, un compresseur basse pression 31, un compresseur haute pression 32, une chambre de combustion 33, une turbine haute pression 34 et une turbine basse pression 35.

De manière conventionnelle, lors du fonctionnement d'un tel turboréacteur 1, un écoulement d'air 4 pénètre dans le turboréacteur 1 par une entrée d'air, traverse la soufflante 2 puis se divise en un flux primaire 4A central et un flux secondaire 4B. Le flux primaire 4A s'écoule dans une veine principale 5A de circulation des gaz traversant les compresseurs 31 et 32, la chambre de combustion 33 et les turbines 34 et 35. Le flux secondaire 4B s'écoule quant à lui dans une veine secondaire 5B entourant le générateur de gaz 3 et délimitée radialement vers l'extérieur par une virole extérieure 6 du turboréacteur 1.

Dans cet exemple, le turboréacteur 1 comprend une couronne d'aubes directrices 7 s'étendant dans la veine secondaire 5B, en aval de la soufflante 2. Ces aubes 7 forment un aubage directeur de sortie (OGV) qui relie la virole extérieure 6 à un carter 8 entourant le compresseur basse pression 31. Les aubes 7 sont espacées circonférentiellement les unes des autres et permettent de redresser le flux secondaire 4B en sortie de la veine secondaire 5B. Ces aubes 7 peuvent aussi assurer une fonction structurale.

L'invention se rapporte plus spécifiquement à la fabrication d'une telle aube 7.

Une aube 7 conforme à l'invention est représentée à la figure 2.

De manière connue, la réalisation d'une telle aube 7 comprend une opération d'assemblage de deux pièces préfabriquées. En référence aux figures 2 à 4, l'une de ces pièces forme un corps 71, et l'autre pièce forme un capot 72.

Dans l'exemple illustré à la figure 1, l'aube 7 s'étend radialement dans la veine secondaire 5B sans inclinaison axiale, c'est-à-dire sans inclinaison le long de l'axe longitudinal A1.

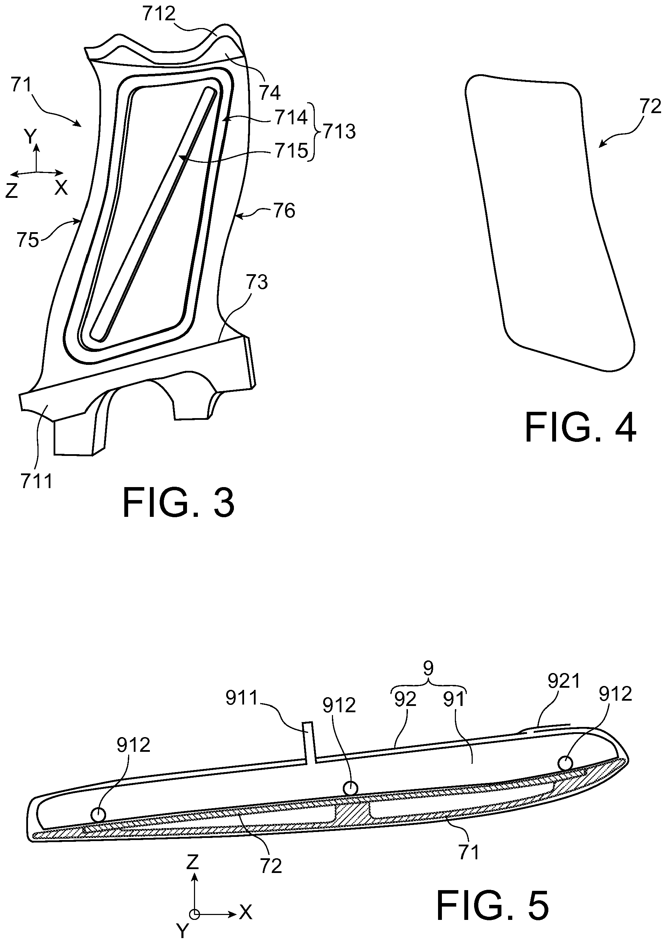

Dans l'exemple de la figure 3, le corps 71 de l'aube 7 présente une inclinaison axiale, l'axe X du repère de cette figure étant sensiblement parallèle à l'axe central longitudinal A1 du turboréacteur 1 lorsque cette aube 7 est montée sur ce turboréacteur 1.

L'aube 7 comprend une partie aérodynamique, destinée à être exposée au flux secondaire 4B. La partie aérodynamique de l'aube 7 est située entre un pied 711 et une tête 712 de cette aube 7 (voir figure 3).

Dans cet exemple, le pied 711 sert à la fixation de l'aube 7 sur le carter 8 du compresseur basse pression 31, tandis que la tête 712 sert à la fixation de cette aube 7 sur la virole extérieure 6.

Le pied 711 et la tête 712 de l'aube 7 comprennent chacun une plateforme 73 et 74, respectivement, ces plateformes étant destinées à reconstituer la veine secondaire 5B, circonférentiellement entre les aubes 7.

En référence aux figures 2 et 3, l'aube 7 forme un bord d'attaque 75, un bord de fuite 76, un intrados 77 et un extrados 78.

Le corps 71 de l'aube 7 est conformé de manière à définir une face de jonction 713 prévue pour fixer le capot 72 à ce corps 71.

Dans l'exemple de la figure 3, la face de jonction 713 comporte une partie 714 périphérique formant un renflement longeant à la fois le bord d'attaque 75, le pied 711, le bord de fuite 76, et la tête 712. Cette partie 714 de la face de jonction 713 forme sensiblement un rectangle.

La face de jonction 713 comporte aussi une partie 715 formant sensiblement un renflement selon une diagonale du rectangle formé par la partie 714.

Entre ces parties 714 et 715 de la face de jonction 713, le corps 71 comporte des parties creusées 716 destinées à réduire sa masse (voir figure 2).

La figure 4 fait apparaître une face interne du capot 72 destinées à venir en vis-à-vis de la face de jonction 713 du corps 71, de manière à fixer le capot 72 au corps 71 par collage d'une partie de cette face interne du capot 72 à ladite face de jonction 713.

Pour réaliser cet assemblage, le procédé de l'invention comprend une étape de dépôt d'une résine polymérisable sur la face de jonction 713 du corps 71.

Par exemple, cette résine peut comprendre un polymère liquide thermodurcissable du type résine époxy.

Alternativement ou complémentairement, la résine peut être déposée sur des parties du capot 72 qui seront situées en vis-à-vis de la face de jonction 713 après positionnement du capot 72 sur le corps 71. Il est préféré de déposer la résine sur la face de jonction 713 car celle-ci est structurellement délimitée, contrairement aux parties correspondantes de la face interne du capot 72, lesquelles sont agencées sur cette face interne sans discontinuité de surface.

Le procédé comprend une étape de positionnement du capot 72 sur la face de jonction 713 du corps 71, après dépôt de la résine sur cette face de jonction 713 et/ou sur lesdites parties correspondantes de la face interne du capot 72.

Cette étape de positionnement, ou d'accostage du capot 72 et du corps 71, est réalisée de sorte qu'une face externe 721 du capot 72 et une face externe 717 du corps 71 forment ensemble ledit intrados 77 de l'aube 7 (voir figure 2).

En référence à la figure 5, le procédé de l'invention comprend une étape de disposition d'une vessie 91 contre l'intrados 77 de l'aube 7.

Cette vessie 91 est gonflable et comprend de préférence du silicone, qui permet de former une vessie d'épaisseur suffisamment faible pour pouvoir être déformée sous l'effet de son gonflage, et suffisamment grande pour exercer l'effort de plaquage requis (voir ci-après).

La vessie 91 est prévue pour exercer sur le capot 72 un effort de plaquage de celui-ci contre la face de jonction 713 du corps 71, et donc contre la résine recouvrant cette face de jonction 713, en vue de sa polymérisation par chauffage. Typiquement, l'effort de plaquage correspond à une contrainte de 10⁵ Pa.

La vessie 91 de la figure 5 est dimensionnée pour recouvrir la totalité de la face externe 721 du capot 72 et une partie de ladite face externe 717 du corps 71, de sorte que cette vessie 91 vienne en appui - au moins après gonflage - contre la quasi-totalité de l'intrados 77 de l'aube 7.

Afin de maintenir la vessie 91 contre l'intrados 77 de l'aube 7 en exerçant ledit effort de plaquage lors de l'étape de chauffage (voir ci-dessous), l'outillage 9 de l'invention comprend une poche 92 réalisée dans cet exemple dans un matériau rendant cette poche 92 inextensible ou sensiblement inextensible.

La poche 92 comprend par exemple un tissu, lequel doit bien entendu résister aux températures auxquelles l'outillage 9 est soumis lors du chauffage.

Après disposition de la vessie 91 contre l'intrados 77 de l'aube 7, la poche 92 est agencée de manière à envelopper la vessie 91, le capot 72 et le corps 71.

La poche 92 peut comprendre des moyens d'ouverture/fermeture 921 du type sangle ou clips mécaniques.

Un tel outillage 9 peut être aisément dimensionné pour être adapté à des aubes conventionnelles de différentes dimensions.

A cet effet, il est préférable de dimensionner la vessie 91 de sorte que sa dimension d'extension axiale, le long de l'axe X, soit inférieure à la distance entre le bord d'attaque 75 et le bord de fuite 76 de l'aube 7, comme cela est illustré à la figure 5. Cela permet d'éviter un pincement de la vessie 91 entre la poche 92 et l'un de ces bords 75 ou 76.

Après fermeture ou maintien en position de la poche 92, les étapes de gonflage de la vessie 91 et de chauffage peuvent être réalisées, successivement ou simultanément.

Dans cet exemple, la vessie 91 est tout d'abord gonflée de manière à exercer l'effort de plaquage sur le capot 72. L'aube 7 et l'outillage 9 sont alors agencés selon la configuration illustrée à la figure 5.

Pour ce faire, la vessie 91 comprend un canal de gonflage 911 apte à acheminer dans la vessie 91 un fluide de gonflage tel que de l'air comprimé. Pour maintenir le fluide de gonflage dans la vessie 91, le canal de gonflage 911 peut être équipé d'une valve anti-retour (non représentée). La pression du fluide de gonflage dans la vessie 91 peut être contrôlée à l'aide d'un manomètre (non représenté).

Dans cet exemple, l'étape de chauffage est ensuite mise en œuvre afin de polymériser la résine et fixer ainsi le capot 72 sur le corps 71.

En fonction des moyens ou des conditions de chauffage, les étapes de gonflage et de chauffage peuvent être initiées simultanément ou de manière différée. Par exemple, l'étape de chauffage peut être initiée avant initiation de l'étape de gonflage, ou au cours du gonflage, si les moyens de chauffage et de gonflage le permettent. Une initiation de l'étape de chauffage avant finalisation du gonflage peut être avantageuse notamment lorsque les moyens de chauffage nécessitent une durée de montée en température relativement importante.

Dans l'exemple de la figure 5, la vessie 91 comprend des moyens de chauffage internes 912 agencés en vis-à-vis de la face de jonction 713 du corps 71 et permettant ainsi d'augmenter sélectivement la température à proximité de la résine.

Les moyens de chauffage internes 912 sont par exemple des résistances électriques.

De tels moyens de chauffage internes 912 peuvent s'avérer insuffisants pour atteindre la température requise afin de polymériser la résine, cette température étant typiquement comprise entre 160°C et 180°C.

Ainsi, il peut être recouru à un dispositif d'apport de chaleur externe (non représenté) apte à contribuer à la polymérisation de la résine. Par exemple, ce dispositif d'apport de chaleur peut consister en une étuve dans laquelle sont installés l'outillage 9 et l'aube 7, ou encore en un dispositif de chauffage par rayonnement ou par induction.

Dans un autre mode de réalisation, non représenté, l'étape de chauffage peut être réalisée uniquement à l'aide d'un dispositif d'apport de chaleur externe, la vessie 91 ne comprenant pas dans ce cas de moyens de chauffage internes.

L'assemblage du corps 71 et du capot 72 selon l'invention est généralement réalisée à un stade où l'usinage de ces pièces n'est pas achevé, de sorte que ces pièces peuvent comprendre des arêtes vives ou des parties saillantes tranchantes, lesquelles peuvent endommager la vessie 91.

Pour protéger la vessie 91 de vives arêtes de l'aube 7, cette vessie 91 peut comprendre un ou plusieurs renforts tels que des inserts métalliques. La vessie 91 peut aussi comprendre une surépaisseur constituant de tels renforts, et/ou logeant de tels inserts métalliques ou moyens de renforts équivalents.

## Revendications

1. Procédé d'assemblage d'une aube (7) pour aubage directeur de sortie d'un turboréacteur (1) d'aéronef à double flux, comprenant :
- une étape de dépôt d'une résine polymérisable sur une face de jonction (713) d'un corps (71) de ladite aube (7),
- une étape de positionnement d'un capot (72) de l'aube (7) sur ladite face de jonction (713) recouverte de ladite résine de sorte qu'une face externe (721) du capot (72) et une face externe (717) du corps (71) forment ensemble un intrados (77) de cette aube (7),
- une étape de disposition d'une vessie (91) gonflable contre l'intrados (77) de l'aube (7),
- une étape de gonflage de la vessie (91) ainsi maintenue contre l'intrados (77) de manière à exercer sur le capot (72) un effort de plaquage de celui-ci contre ladite face de jonction (713) du corps (71), ce procédé étant **caractérisé en ce qu'**il comprend :
- une étape d'enveloppement de la vessie (91), du capot (72) et du corps (71) avec une poche (92) de manière à maintenir la vessie (91) contre l'intrados (77), et
- une étape de chauffage apte à polymériser la résine et fixer ainsi le capot (72) sur le corps (71) de l'aube (7).

2. Procédé selon la revendication 1, dans lequel l'étape de chauffage comprend un chauffage de la vessie (91) à l'aide de moyens de chauffage internes (912) à la vessie (91).

3. Procédé selon la revendication 1 ou 2, dans lequel l'étape de chauffage comprend un apport de chaleur externe.

4. Outillage (9) pour mettre en œuvre le procédé selon l'une quelconque des revendications 1 à 3, comprenant une vessie (91) gonflable, **caractérisé en ce qu'**il comprend une poche (92) apte à maintenir la vessie (91) contre l'intrados (77) de manière à exercer ledit effort de plaquage du capot (72) contre ladite face de jonction (713) du corps (71).

5. Outillage (9) selon la revendication 4, dans lequel la poche (92) est réalisée dans un matériau inextensible.

6. Outillage (9) selon la revendication 4 ou 5 pour mettre en œuvre le procédé selon la revendication 3, comprenant un dispositif d'apport de chaleur externe tel qu'une étuve ou un dispositif de chauffage par rayonnement ou par induction.

7. Outillage (9) selon l'une quelconque des revendications 4 à 6, dans lequel la vessie (91) comprend du silicone.

8. Outillage (9) selon l'une quelconque des revendications 4 à 7, dans lequel la vessie (91) comprend un ou plusieurs renforts agencés pour la protéger de vives arêtes de l'aube (7).

9. Outillage (9) selon la revendication 8, dans lequel la vessie (91) comprend un ou plusieurs inserts métalliques formant un ou plusieurs desdits renforts.

10. Outillage (9) selon la revendication 8, dans lequel un ou plusieurs desdits renforts sont constitués par une surépaisseur de la vessie (91).

## Patentansprüche

1. Verfahren zum Zusammenbauen einer Schaufel (7) für eine Auslassleitschaufel einer Zweistrom-Turbomaschine (1) eines Flugzeugs, umfassend:
- einen Schritt des Aufbringens eines polymerisierbaren Harzes auf eine Verbindungsfläche (713) eines Körpers (71) der Schaufel (7),
- einen Schritt des Positionierens einer Haube (72) der Schaufel (7) auf der mit dem Harz bedeckten Verbindungsfläche (713) derart, dass eine äußere Fläche (721) der Haube (72) und eine äußere Fläche (717) des Körpers (71) gemeinsam eine Druckseite (77) dieser Schaufel (7) bilden,
- einen Schritt des Anordnens einer aufblasbaren Blase (91) an der Druckseite (77) der Schaufel (7),
- einen Schritt des Aufblasens der somit an der Druckseite (77) gehaltenen Blase (91) derart, dass auf die Haube (72) eine Andrückkraft derselben an die Verbindungsfläche (713) des Körpers (71) ausgeübt wird,
wobei dieses Verfahren **dadurch gekennzeichnet ist, dass** es umfasst:
- einen Schritt des Umhüllens der Blase (91), der Haube (72) und des Körpers (71) mit einer Tasche (92), so dass die Blase (91) an der Druckseite (77) gehalten wird, und
- einen Schritt des Erwärmens, der imstande ist, das Harz zu polymerisieren und somit die Haube (72) auf dem Körper (71) der Schaufel (7) zu befestigen.

2. Verfahren nach Anspruch 1, wobei der Schritt des Erwärmens ein Erwärmen der Blase (91) mit Hilfe interner Heizmittel (912) der Blase (91) umfasst.

3. Verfahren nach Anspruch 1 oder 2, wobei der Schritt des Erwärmens eine Zufuhr von Wärme von außen umfasst.

4. Werkzeug (9) zur Durchführung des Verfahrens nach einem der Ansprüche 1 bis 3, das eine aufblasbare Blase (91) umfasst, **dadurch gekennzeichnet, dass** es eine Tasche (92) umfasst, die imstande ist, die Blase (91) an der Druckseite (77) derart zu halten, dass die Andrückkraft der Haube (72) an der Verbindungsfläche (713) des Körpers (71) ausgeübt wird.

5. Werkzeug (9) nach Anspruch 4, wobei die Tasche (92) aus einem nicht dehnbaren Material hergestellt ist.

6. Werkzeug (9) nach Anspruch 4 oder 5 zur Durchführung des Verfahrens nach Anspruch 3, das eine Vorrichtung für die Zufuhr von Wärme von außen wie einen Ofen oder eine Heizvorrichtung durch Strahlung oder durch Induktion umfasst.

7. Werkzeug (9) nach einem der Ansprüche 4 bis 6, wobei die Blase (91) Silikon umfasst.

8. Werkzeug (9) nach einem der Ansprüche 4 bis 7, wobei die Blase (91) eine oder mehrere Verstärkungen umfasst, die eingerichtet sind, um sie vor scharfen Kanten der Schaufel (7) zu schützen.

9. Werkzeug (9) nach Anspruch 8, wobei die Blase (91) einen oder mehrere Metalleinsätze umfasst, die eine oder mehrere der Verstärkungen bilden.

10. Werkzeug (9) nach Anspruch 8, wobei eine oder mehrere der Verstärkungen von einer Überdicke der Blase (91) gebildet sind.

## Claims

1. Method of assembling a vane (7) for the outlet guide vane assembly of a twin-spool aircraft turbojet (1), comprising:
- a step to deposit a polymerisable resin on a junction face (713) of a body of the said vane (7),
- a step to position a cap (72) of the vane (7) on said junction face (713) covered with said resin such that an external face (721) of the cap (72) and an external face (717) of the body (71) together form an intrados (77) of this vane (7),
- a step to arrange an inflatable bladder (91) in contact with the intrados (77) of the vane (7),
- a step to inflate the bladder (91) thus held in contact with the intrados (77) in order to apply a force on the cap (72) to force the cap into contact with said junction face (713) of the body (71), this method being **characterised in that** it comprises:
- a step to surround the bladder (91), the cap (72) and the body (71) with a pouch (92) so as to hold the bladder (91) in contact with the intrados (77), et
- a heating step to polymerise the resin and thus fix the cap (72) on the body (71) of the vane (7).

2. Method according to claim 1, wherein the heating step comprises heating the bladder (91) using heating means (912) internal to the bladder (91).

3. Method according to claim 1 or 2, wherein the heating step comprises an external heat input.

4. Tooling (9) to implement the method according to any one of claims 1 to 3, comprising an inflatable bladder (91), **characterised in that** it comprises a pouch (92) capable of holding the bladder (91) in contact with the intrados (77) so as to apply said force bringing the cap (72) into contact with said junction face (713) of the body (71).

5. Tooling (9) according to claim 4, wherein the pouch (92) is made of a non-stretch material..

6. Tooling (9) according to claim 4 or 5, to implement the method according to claim 3, comprising an external heat supply device such as an oven or a radiation or induction heating device.

7. Tooling according to any one of claims 4 to 6, wherein the bladder (91) comprises silicone.

8. Tooling (9) according to any one of claims 4 to 7, wherein the bladder (91) comprises one or more reinforcements arranged to protect it from sharp edges of the vane (7).

9. Tooling (9) according to claim 8, wherein the bladder (91) comprises one or more metal inserts forming one or more of said reinforcements.

10. Tooling (9) according to claim 8, wherein one or more of said reinforcements consist of an overthickness of the bladder (91).
